# EUROPEAN PATENT APPLICATION

(11) **EP 4 600 881 A1**
(43) Date of publication of application: **13.08.2025**
(21) Application number: 24156849.2
(22) Date of filing: 09.02.2024
(51) Int. Cl.: G06Q 10/20

(54) **COMPUTER-IMPLEMENTED METHOD FOR CONFIGURATING AT LEAST ONE DEVICE OF A SYSTEM**

(71) Applicant: ABB SCHWEIZ AG, 5400 Baden (CH)
(72) Inventor: GRUENER, Sten, 69514 Laudenbach (DE); TROSTEN, Anders, 724 76 Västerås (SE)
(74) Representative: Maiwald GmbH

(57) **Abstract**

The present invention relates to a computer-implemented method (100) for configurating at least one device (50) of a system (90), comprising the following steps:
- Providing (102) first data (10) of the at least one device (50) related device-specific data of the at least one device (50);
- Generating (104) at least a first maintenance job (15) describing a change request requirement applied on the at least one device (50) based on the first data (10);
- Creating (106) at least a first approval ticket (17) based on a first verification check procedure (18) of the generated first maintenance job (15) of the at least one device (50);
- Processing (112) the at least first maintenance job (25) with the at least first approval ticket (17) to perform the configuration of the at least one device (50).

## Description

### FIELD OF THE INVENTION

The present invention relates to a computer-implemented method for configurating at least one device of a system.

### BACKGROUND OF THE INVENTION

Process plants use numbers of (field) devices, e.g., temperature or pressure sensors, valves, etc., to collect information from a physical process and adjust it (actuate), respectively. Such devices are relatively complex devices which allow configuring of dozens to hundreds of parameters and to upgrade internal firmware providing those parameters and interpreting them.

Changes of device parameters as well as its firmware may lead to unforeseen consequences within a physical plant and therefore, need to be treated as sensitively as changes in a Distributed Control System (DCS), for example, a change of parameters of PID control loops. For example, the US 8239498 B2 describes a system and method for facilitating the implementation of changes to the configuration of resources in an enterprise.

However, such (field) devices provide a lot of different access possibilities. This starts with field bus connection to the DCS, going over to specialized parametrization interfaces accessible with dedicated hardware or Bluetooth, to embedded webservers, or on-device buttons. All these access interfaces are difficult to secure and maintain and are often not controlled in practice.

There is a need to address these issues.

### SUMMARY OF THE INVENTION

Therefore, it would be advantageous to provide an improved concept for configurating and maintaining of at least one device of a system in an efficient, secure and automated manner.

The object of the present invention is solved by the subject matter of the independent claims, wherein further embodiments are incorporated in the dependent claims.

In a first aspect of the present invention, there is provided a computer-implemented method for configurating at least one device of a system, comprising the steps:
- providing first data of the at least one device related device-specific data of the at least one device;
- generating at least a first maintenance job describing a change request requirement applied on the at least one device based on the first data;
- creating at least a first approval ticket based on a first verification check procedure of the generated first maintenance job of the at least one device;
- processing the at least first maintenance job with the at least first approval ticket to perform the configuration of the at least one device.

In other words, a core idea behind the present invention is to update a configuration of the system that may include maintaining and / or updating of at least one device in a system. This configuration can be performed automatically and in an efficient manner, saving valuable resources in the entire configuration process for the relevant devices connected to such system. Updating in the sense of the present invention may mean to update a software, e.g. a firmware, of a device in such an industrial system. Furthermore, updating the system parts yields an effect in the physical plant which the configured devices are involved.

The devices may be field devices or any other type of devices. The system of such devices may be an industrial plant in which a physical process needs to be controlled by said devices that need to be configurated in a manner described according to the present invention. The system can, for example, be also a production system in manufacturing or process industry domains.

The present invention also allows to address the following problems that usually occur with configuration of devices in a system and that are listed just as a few examples:
- Device configuration is changed through a covert channel, e.g., display or Bluetooth, without DCS being aware of it.
- System as-is state degrades compared to the as-planned state over time and an undocumented system state emerges.
- The worst case is the exchange of the whole device, e.g., due to an emergency, which is never reflected in the plant documentation which might invalidate plant's certification.
- No a-priori control of the intended changes done in an automated way; plant owner/operators manage this process without field device/DCS being aware of it which may result in unsafe/unintended configurations of field devices.
- Same holds for updates of device firmware which might alter the meaning of certain device parameters and therefore invalidate a tested device configuration yielding an invalid system state.

As a first important aspect of the present invention and to overcome said problems and issues as indicated above, the present invention uses a so-called Verification of Request (VoR) style implementation or mechanism for device and /or DCS configuration. Such an implementation provides a set of rules to audit and validate a change process, e.g. a write-access to the contents of a control system which may be embodied as a core process control (CPC) domain. For the definition of the CPC and VoR domain, it is referred to prior art publications around "NAMUR Open Architecture", for example: https://www.namur.net/en/focus-topics/namur-open-architecture.html.

As a second important aspect of the present invention is using of a so-called "ticket"-based system that operates and uses cryptographically signed "change approval tickets" accomplishing "change requests" to to-be-configurated devices of the system. Change requests include, but are not limited to, changing certain parameter of a specific device, calling a method on a device, updating device firmware or applying a set parameter change of the same time.

Change requests themselves can originate from a (possibly cloud-based) application, e.g., a maintenance application, which maintains an inventory of installed/available devices in an organizational unit, e.g., site, plant, plant segment, line, and is also connected to external systems, e.g., IT-systems of component vendors, to get latest available device-information including their firmware update options.

Tickets accomplishing change requests are issued by a VoR component and are enforced/acknowledged or implemented by a field device management software or even the (field) device itself.

An approval ticket or more generally, a ticket describes approved changes in a certain device of the system, e.g. a firmware update or a parameter change.

Further, the present invention allows to link the ticket-creation-process via MoM/IOM to enterprise systems like MES, or ERP/SAP to allow its gradual refinement towards the execution. An example is linkage of the change ticket to other system parameters, e.g., some dedicated spot in time, e.g., in an allowed maintenance window or generalizing the ticket to a set of devices, e.g., mass-update of the firmware of the sensors of the same type.

Therefore, the present invention allows the following advantages:
- Seamless integration of Verification of Request mechanisms from a viewpoint of the owner/operator: changes in the automation software (e.g., setpoints of control loops) and device parameters (e.g., alarm ranges) must undergo same processes regarding common VoR mechanisms.
- Increasing engineering efficiency and removing of possible human errors when configurating devices of a plant system.
- Enabling autonomous systems to automatically apply corrections to a device in a safe and secure manner when a problem is detected.
- Compatible to different existing VoR concepts allows broad customer acceptance.
- Opportunity to add additional features to change request processes and traceability to be the VoR agent for devices of different customers or manufacturers.

According to an example, the method comprising the step of refining the first maintenance job after generating the first approval ticket, by the following steps:
- generating a second maintenance job based on the generated first maintenance job by adding second data to the second maintenance job;
- creating a second approval ticket based on a second verification check procedure of the generated second maintenance job of the at least one device. In this way, the first maintenance job is refined and detailed in an efficient manner to obtain a second refined maintenance job.

According to an example, the first data comprises at least one of the following: a number of devices of the system, a static information and / or a dynamic information of the at least one device. In this way, the configuration of the system can be done in an efficient manner that is easily adaptable to changing application-scenarios.

According to an example, the second data comprises further device-specific data that specifies the second (refined) maintenance job. In this way, the second (refined) maintenance job can be enriched with useful data that helps improving the change process for the at least one device.

According to an example, the first data and / or the second data are at least partly obtained by an external data provider. In this way, the change process of said device can be performed in a more detailed and efficient manner taking into account a changing application scenario within the system.

According to an example, the first maintenance job is initiated by a user command and / or automatically. In this way, operation of the change or configuration process of said device can be flexibly performed depending on a changing application scenario.

According to an example, the first maintenance job is generated on a first system level of the system and the second maintenance job is generated on a second system level of the system. In this way, separation of different change or configuration process steps can be implemented in different granularity depending on the system on which the configuration process is implemented or performed.

According to an example, the first verification check procedure includes a digital signature of the first approval ticket indicating a permission whether configuration of the at least one device is allowed. In this way, security requirements for the system are efficiently implemented.

According to an example, the second verification check procedure includes at least one of the following checks: a safety criteria check on the at least one device, check of at least one device-related setting and / or parameter of the at least one device. In this way, security requirements for the system are efficiently implemented ensuring a defined safety level of or for the configuration process performed for or within the system.

According to an example, the result of the first verification check procedure and / or the second verification check procedure is stored at least partly in the corresponding approval ticket. In this way, approved security settings can be efficiently provided/implemented for processing the configuration process of at least one device.

According to an example, the at least one approval ticket comprises a cryptographic signature of the corresponding maintenance job. In this way, a predefined security standard for the maintenance jobs is ensured.

According to an example, the at least one device is a field device and / or a specific class of devices of the system. In this way, performance of an efficient configuration process is allowed for the at least one device or a number of specific devices in the system.

In a second aspect of the present invention, a computer-system is provided that is configured to execute the computer-implemented method according to any of the previous examples and / or according to the first aspect for configurating at least one device of a system.

In a third aspect of the present invention, a computer comprising a processor configured to perform the method according to the first aspect and / or according to any of the previous examples is provided.

In a fourth aspect of the present invention, a computer program product is provided comprising instructions which, when the computer program is executed by a processor of a computer, causes the computer to control the method of the first aspect.

In a fifth aspect, a machine-readable data medium and / or download product is provided containing the computer program according to the third aspect.

### BRIEF DESCRIPTION OF THE DRAWINGS

Exemplary embodiments will be described in the following with reference to the following drawings:
Fig. 1 illustrates a schematic flow-diagram of a method of the present invention;
Fig. 2 illustrates a schematic flow-diagram of a method of the present invention according to an embodiment of the present invention; and
Fig. 3 illustrates a computer system for configuration of at least one device of a system according to an embodiment of the present invention.

### DETAILED DESCRIPTION OF THE DRAWINGS

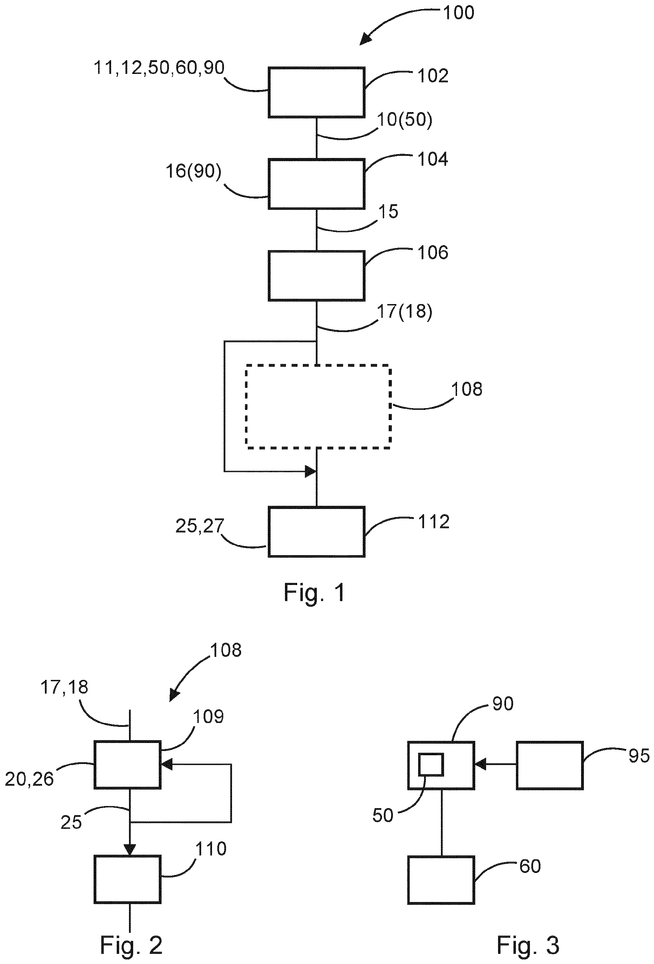

Fig. 1 illustrates a schematic flow-diagram of a method 100 for configurating at least one device 50 of a system 90 of the present invention. Configuration in the sense of the present invention may mean change of at least one parameter of the device 50, updating software of said device 50, replacement of device 50 according to a changing application scenario.

In the context of the present invention, the at least one device 50 may be a (field) device and / or a specific class of devices 50 of the system 90 with multiple devices 50.

In a first step 102, first data 10 of the at least one device 50 related device-specific data of the at least one device 50 are provided.

Optionally, the first data 10 comprises at least one of the following: a number of devices 50 of the system 90, a static information 11 and / or a dynamic information 12 of the at least one device 50.

A static information 11 may be for example device location, device type, serial number, firmware version etc. Static information 11 may delivered via an (I)IoT system or otherwise comprising a digital inventory of devices.

A dynamic information 12 of the at least one device 50 may be for example information providing a current status or state of the device 50 allowing a constant monitoring of device state. Dynamic information 12 may delivered via an (I) IoT system or otherwise comprising a digital inventory of devices. In this context, it should be mentioned that reading data out of field devices, like a serial number etc., does not need to go throu VoR in an example of the present invention.

In a second step 104, at least one or at least a first maintenance job 15 is generated describing a change request requirement applied on the at least one device 50 based on the first data 10.

Optionally, the first maintenance job 15 is initiated either by a user command, e.g. via an app or web interface, and / or automatically, the VoR mechanism allows/restricts permission of user to initiate changes on the at least one device 50 of the system 90.

In a third step 106, at least one or a first approval ticket 17 is created based on a first VoR verification check procedure 18 of the generated first maintenance job 15 of the at least one device 50.

Optionally, the first verification check procedure 18 includes a digital signature of the first approval ticket 17 indicating a permission whether configuration of the at least one device 50 is allowed. The digital signature of the first approval ticket 17 means whether a specific entity is allowed to initiate changes on a particular site of the system 90 or a device 50. Verification in the sense of the present invention may also include the term validation.

In an optional fourth step 108, a refinement of the first maintenance job 15 after the step of generating 106 the first approval ticket 17 may be performed by the following sub-steps:
- generating 109 a second (refined) maintenance job 25 based on the generated first maintenance job 15 by adding second data 20 to the second maintenance job 25;
- creating 110 a second approval ticket 27 based on a second verification check procedure 28 of the generated second maintenance job 25 of the at least one device 50.

In such an optional scenario, when the step of refining the at least first maintenance job 15 is performed to obtain the second maintenance job 25, the step of processing 112 includes processing the second maintenance job 25 with the second approval ticket 27 to perform the configuration of the at least one device 50.

In this way, the first maintenance job 15 is refined and detailed. In a further example, the refinement of the first maintenance job 15 may be performed multiple times to detail or refine the second maintenance job 25 various times, if necessary according to a certain application scenario. This means that the step 109 in Fig. 2 may be performed multiple times to obtain a final second (refined) maintenance job 25 that fulfils a certain requirement or criteria. The Fig. 2 depicts such an optional scenario.

However, the step 108 may also be omitted and the method may also be performed only with the generated first maintenance job 15 (step 104) and its corresponding first approval ticket 17 (step 106) in case no further refinements for the generated first maintenance job 15 are required.

The second maintenance job 25 may comprise information such as device identification, technical device location (e.g., OPC UA endpoint), actions (e.g., firmware update or parameter change), supplementary data (e.g., byte stream representing new firmware binary, or set of parameter values to be applied to the device 50 - at least partly based on the second data 20.

Optionally, the second data 20 comprise further device-specific data that specifies the second maintenance job 25.

The second data 20 may comprise information, e.g. of mapping of an abstract device identification (serial number) to a technical device location (e.g. IP/hostname of OPC UA Endpoint, or I/O interface location of HART interface of the device).

Furthermore, additional on-premise-related adjustments to the job can be made like detailing the time-frame of changes based on scheduling information, for example, obtaining maintenance window information from MES/ERP systems like SAP.

In step 110, a second approval ticket 27 is created based on a second verification check procedure 28 of the generated second maintenance job 25 of the at least one device 50.

Optionally, the second verification check procedure 28 includes at least one of the following checks: a safety criteria check on the at least one device 50, check of at least one device-related setting and / or parameter of the at least one device 50.

In this manner, a cross-check is performed by VoR component, whether the second maintenance job 25 matches all safety criteria of the specific plant system 90.

Examples for rule-based VoR checks may include:
- check if parameters are in correct ranges,
- check if device is allowed to be put in "maintenance" mode to perform updates,
- check if firmware version if "approved" by site or enterprise (here we assume that the owner/operator is performing some pre-tests of firmware for various devices before dispatching the updates across the enterprise).

Optionally, the first approval ticket 17 and the second approval ticket 27 comprise a cryptographic signature of the corresponding maintenance job 15, 25.

Optionally, the result of the first verification check procedure 18 and / or the second verification check procedure 28 is stored at least partly in the corresponding approval ticket 17, 27.

In sixth step 112, the second maintenance job 25 is processed with the second approval ticket 27 to perform the configuration of the at least one device 50.

In regard of the configuration or change process of the at least one device 50 of the system 90, further aspects are of interest:
In case the field device 50 is an OPC UA device, Field information management (FIM) or another OPC UA Client, e.g., within an edge device, can be used to authorize changes by processing the ticket and in the following obtain an authenticated and authorized session to the field device and to perform the required changes, e.g., writing parameters or triggering the firmware update method. This method is applicable to any standardized device, and is hence not requiring any changes in the field device, except security configurations.

In case of a fieldbus field device 50 behind FIM: in this case FIM is responsible for validating the ticket and invoking changes described in the maintenance job. Security between FIM and the field device is handled by FIM depending on which security measures are supported within the device and the field device.

Ticket-aware device: the method of the present invention allows that the maintenance job and the tickets are passed directly into the device (e.g., by means of an OPC UA method call). The field device performs evaluation of the maintenance job and the approval tickets and applies the changes directly within the firmware of said device 50.

In the following, optional features of the foregoing described method steps are presented in a more detailed manner.

Optionally, the first data 10 and / or the second data 20 are at least partly obtained by an external data provider 60. Therefore, the system 90 may be connected via an interface to an external repository or a 3rd party vendor, e.g., non-ABB vendors, to provide updated information on available device updates or parameter configuration.

Optionally, the first maintenance job 15 is generated on a first system level 16 of the system 90 and the second maintenance job 25 is generated on a second system level 26 of the system 90. The first system level 16 may be a so-called central monitoring and operating level (M+O). The second level 17 may be a more detailed level below the first level 17. However, it should be noted that the method of the present invention may also be implemented in a system 90 without using different implementation levels, but instead of using just one level for the complete method steps.

Fig. 3 illustrates a computer system 95 for configuration of at least one device 50 of a system 90 according to an embodiment of the present invention.

The computer system 95 is configured to execute the computer-implemented method 100 for configurating at least one device 50 of the system 90.

The computer system 95 may be part of or implemented in the system 90 and / or may be partly connected in an external manner to the system 90.

In this implementation, the system 90, which may be an industrial system, has at least one interface to an external data provider 60. Such interfaces may be embodied as device-vendor-specific API adapters which are produced to connect a central M+O control engine to 3rd party vendors, or through a standardized API, e.g., by implementing Asset Administration Shell API (IEC 63278) interfaces.

In this context, the some of the key aspects of the present invention are summarized in the following:
The idea of the invention is to bundle device changes and DCS changes into one VoR system to ensure seamless processes and user experience of owner/operator when applying changes to critical part of the process plant.

Planned changes to field devices are denoted as so-called "device maintenance jobs", e.g., firmware update, parameter change, device replacement (same type) with parameter restoration, new device type replacement, etc.

A device maintenance job can be initiated either bottom-up, for example when a maintenance engineer needs an approval for parameter change, or top-down, for example, when an available firmware update for a device is detected and needs to be propagated down to the field device inventory of a device 50.

In the light of the present invention, the following embodiment may be implemented:
A connectivity from a CPC through information diodes allows the M+O domain to create an inventory of existing field devices within the plant ("inventory" box). Within the inventory, device twins are stored containing at least static information like device location, device type, serial number, firmware version etc. Furthermore, the central M+D domain has access to dynamic data coming from devices, e.g., their error state or current parameter configuration. This allows for constant monitoring of device state and detection of unplanned inconsistencies, e.g., due to emergency repairs.

Based on this device twin, central M+O can connect to external repositories, e.g., to device vendors of non-ABB field devices and retrieve, for example, available field device updates. This might happen through device-vendor-specific API adapters which are produced to connect central M+O to 3rd party vendors, or through a standardized API, e.g., by implementing Asset Administration Shell API (IEC 63278) interfaces.

Based on inventory data, a maintenance job is created by central M+O (first level), either automatically or by a user through an app / web page interface. The job describes particular changes to be applied on a specific device or device class (e.g., a set of devices of the same type in particular location). First steps of VoR mechanisms can be applied on the central M+O level, e.g., whether a specific user is allowed to initiate changes on a particular site. These verification steps are signed of in a partial approval ticket which is similar to a digital signature of the maintenance job data entity.

This job is propagated down to a On-Prem M+O level (second level) where additional checks are performed both on the maintenance job itself and on the partial approval ticket which is accomplishing it. On-Prem M+O VoR Gateways is aware of particular site system layout and might provide additional information to the maintenance job, e.g., mapping an abstract device identification (serial number) to a technical device location (IP/hostname of OPC UA Endpoint, or I/O interface location of e.g. a HART interface of the device).

Furthermore, additional on-premise-related adjustments to the job can be made like detailing the time-frame of changes based on scheduling information, for example, obtaining maintenance window information from MES/ERP systems like SAP. [This is beyond state of the art] Based on these changes, a detailed maintenance job is created which is again cross-checked using VoR rule-based engine to match all safety criteria of the specific plant.

The content of the detailed job description can be for example: device identification, technical device location (e.g., OPC UA endpoint), actions (e.g., firmware update or parameter change), supplementary data (e.g., byte stream representing new firmware binary, or set of parameter values to be applied to the device.

After passing the rule-based checks, results of the validation are stored and signed-off in an approval ticket supplied along with the detailed job description.

The job descriptions and the at least one approval ticket (which is a cryptographic signature of the job) can now be processed differently depending on device capabilities and/or available infrastructure:
1) OPC UA device: in case the field device is an OPC UA device, FIM or other OPC Client, e.g., within Edgenius, can be used to authorize changes by processing the ticket and in the following obtain an authenticated and authorized session to the field device and to perform the required changes, e.g., writing parameters or triggering the firmware update method. [This method is applicable to any standardized OPC UA PA-DIM device, and is hence not requiring any changes in the field device, except security configurations]
2) HART or fieldbus field device behind FIM: in this case FIM is responsible for validating the ticket and invoking changes described in the maintenance job. Security between FIM and the field device is handled by FIM depending on which security measures are supported within the device and the field device.

### Reference signs

- 10: First data
- 11: Static information
- 12: Dynamic information
- 15: First maintenance job
- 16: First system level
- 17: First approval ticket
- 18: First verification check procedure
- 20: Second data
- 25: Second maintenance job
- 26: Second system level
- 27: Second approval ticket
- 28: Second verification check procedure
- 50: Device
- 60: External data provider
- 90: System
- 95: Computer-system
- 100: Method
- 102: Providing
- 104: Generating
- 106: Creating
- 108: Refining
- 109: Generating
- 110: Creating
- 112: Processing

## Claims

1. Computer-implemented method (100) for configurating at least one device (50) of a system (90), comprising the following steps:
- Providing (102) first data (10) of the at least one device (50) related device-specific data of the at least one device (50);
- Generating (104) at least a first maintenance job (15) describing a change request requirement applied on the at least one device (50) based on the first data (10);
- Creating (106) at least a first approval ticket (17) based on a first verification check procedure (18) of the generated first maintenance job (15) of the at least one device (50);
- Processing (112) the at least first maintenance job (25) with the at least first approval ticket (17) to perform the configuration of the at least one device (50).

2. Computer-implemented method (100) according to claim 1 comprising the step of refining (108) the first maintenance job (25) after generating (106) the first approval ticket (17), by the following steps:
- generating (109) a second maintenance job (25) based on the generated first maintenance job (15) by adding second data (20) to the second maintenance job (25);
- creating (110) a second approval ticket (27) based on a second verification check procedure (28) of the generated second maintenance job (25) of the at least one device (50).

3. Computer-implemented method (100) according to any one of the previous claims, wherein the first data (10) comprises at least one of the following: a number of devices (50) of the system (90), a static information (11) and / or a dynamic information (12) of the at least one device (50).

4. Computer-implemented method (100) according to claim 2, wherein the second data (20) comprises further device-specific data that specifies the second maintenance job (25).

5. Computer-implemented method (100) according to any one of the previous claims, wherein the first data (10) and / or the second data (20) are at least partly obtained by an external data provider (60).

6. Computer-implemented method (100) according to any one of the previous claims, wherein the maintenance jobs (15, 17) are initiated by a user command and / or automatically.

7. Computer-implemented method (100) according to any one of the previous claims, wherein the first maintenance job (15) is generated on a first system level (16) of the system (90) and the second maintenance job (25) is generated on a second system level (26) of the system (90).

8. Computer-implemented method (100) according to any one of the previous claims, wherein the first verification check procedure (18) includes a digital signature of the first approval ticket (17) indicating a permission whether configuration of the at least one device (50) is allowed.

9. Computer-implemented method (100) according to any one of the previous claims, wherein the second verification check procedure (28) includes at least one of the following checks: a safety criteria check on the at least one device (50), check of at least one device-related setting and / or parameter of the at least one device (50).

10. Computer-implemented method (100) according to any one of the previous claims, wherein the result of the first verification check procedure (18) and / or the second verification check procedure (28) is stored at least partly in the corresponding approval ticket (17, 27).

11. Computer-implemented method (100) according to any one of the previous claims, wherein the at least one approval ticket (17, 27) comprise a cryptographic signature of the corresponding maintenance job (15, 25).

12. Computer system (95) configured to execute the computer-implemented method (100) according to any of the previous method claims 1 to 11 for configurating at least one device (50) of a system (90).

13. A computer comprising a processor configured to perform the method of any preceding claims 1 to 11.

14. A computer program product comprising instructions which, when the computer program is executed by a processor of a computer, causes the computer to perform the method of any of claims 1 to 11.

15. Machine-readable data medium and / or download product containing the computer program according to claim 14.
